# FASCICULE DE BREVET EUROPEEN

(11) **EP 0 825 128 B1**
(45) Date de publication et mention de la délivrance du brevet: **21.05.2003**
(21) Numéro de dépôt: 97401878.0
(22) Date de dépôt: 05.08.1997
(51) Int. Cl.: B65D 47/24, B65D 83/14

(54) **Organe de fixation d'un dispositif de distribution sur un col d'un réservoir**
Element zur Befestigung einer Abgabevorrichtung an einem Behälterhals
Element for connecting a dispensing device to the neck of a container

(30) Priorité: 14.08.1996 FR 9610199
(43) Date de publication de la demande: 25.02.1998
(73) Titulaire: VALOIS S.A.S., 27110 Le Neubourg (FR)
(72) Inventeur: de Pous, Olivier, 75015 Paris (FR)
(74) Mandataire: CAPRI SARL

(56) Documents cités:
- DE-B- 1 075 054
- FR-A- 2 691 096
- US-A- 4 803 031

## Description

La présente invention concerne un organe de fixation pour fixer un dispositif de distribution telle qu'une pompe ou une valve sur un col d'un réservoir destiné à contenir du produit à distribuer. Un tel organe de fixation est communément désigné sous le terme de bague ou de tourette de fixation selon leur géométrie. On utilise normalement de tels organes de fixation pour la fixation de pompes ou de valves aérosols sur des flacons de verre, de plastique, d'aluminium, etc. contenant un produit fluide à pâteux.

En général, ledit organe de fixation comprend une pièce moulée en matière plastique pourvue de moyens de réception sous la forme d'un logement pour recevoir ladite pompe ou ladite valve. En outre, ledit organe comprend une surface d'appui destinée à établir par interposition d'un joint de col un contact étanche avec le col du réservoir. Cette surface d'appui se présente généralement sous la forme d'une surface annulaire parallèle à la surface d'extrémité du col du réservoir. Le joint de col se présente alors sous la forme d'un joint annulaire plat coincé entre la surface d'appui et l'extrémité supérieure du col du récipient. D'autre part, l'organe de fixation comprend une ouverture centrale destinée au passage d'une tige d'actionnement ou de soupape du dispositif de distribution. En effet, la plupart des pompes et des valves sont pourvues d'une tige de soupape comportant un canal interne creux servant de canal de refoulement du produit expulsé hors de la chambre de pompe ou de valve. Cette tige de soupape est reliée avec le piston de la pompe ou de la valve. Afin d'étanchéifier la tige de soupape au niveau de l'ouverture centrale de l'organe de fixation, il est généralement prévu un joint de soupape qui est disposé au niveau de l'ouverture centrale. Dans le cas d'une pompe, l'étanchéité que procure le joint de soupape qu'au repos : en effet, dès que la tige d'actionnement ou de soupape est enfoncée, l'étanchéité est rompue pour permettre une mise à l'air de la pompe. Dans le cas d'une valve, le joint de soupape permet en outre un coulissement étanche le long de la tige de soupape.

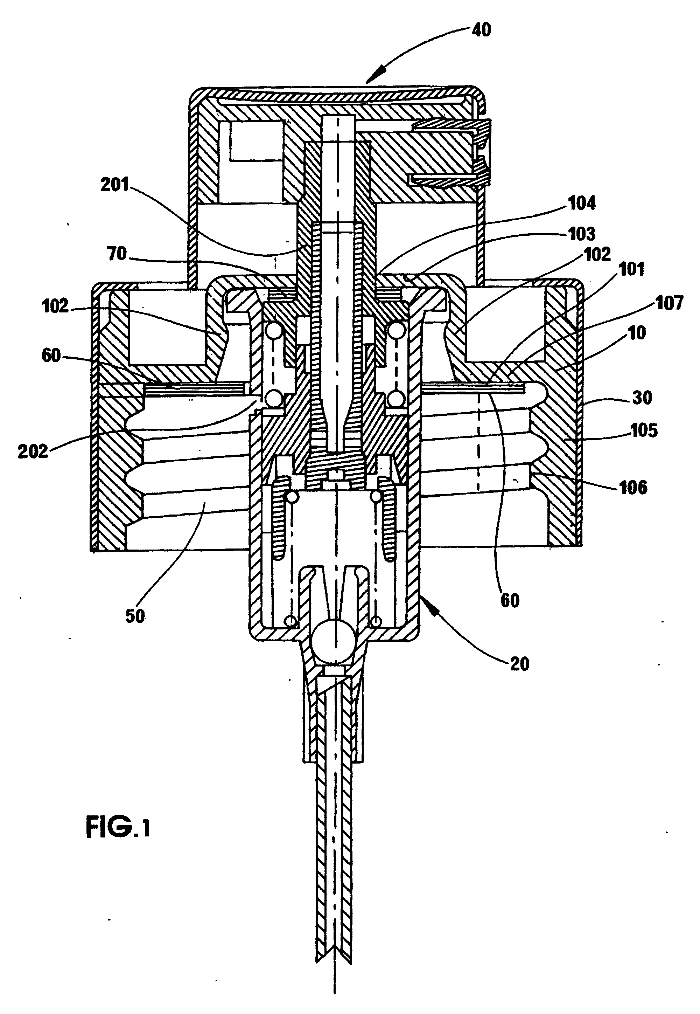

Dans un distributeur classique comme représenté sur la figure 1 pour représenter l'art antérieur, l'organe de fixation 10 comprend des moyens pour le fixer sur le col 50 d'un réservoir, sous la forme d'une bague filetée 105 pourvue de filets internes 106 destinée à venir en prise avec le col fileté 50 du réservoir. En outre, l'organe de fixation comprend un logement d'encliquetage formé dans une partie en forme de dôme constitué d'une paroi sensiblement cylindrique 102 se prolongeant par une collerette 103 présentant une ouverture centrale 104. Le manchon sensiblement cylindrique 102 est relié à la bague 105 par une autre collerette d'entretoise 107 dont la surface inférieure définit une surface d'appui 101 destinée à établir par interposition d'un joint de col 60 en contact étanche avec la surface supérieure du col 50 du réservoir. Le corps de pompe ou de valve 20 est reçu avec son extrémité supérieure dans le logement formé par le manchon 102 et la collerette 103. La tige d'actionnement ou de soupape 201 de la pompe ou de la valve fait saillie hors de l'organe de fixation à travers l'ouverture 104 et reçoit un capuchon de distribution 40 éventuellement pourvue d'un gicleur. Par pression sur le capuchon de distribution 40, la tige d'actionnement ou de soupape 201 est enfoncée vers le bas dans le corps de pompe ou de valve 20. Afin d'établir une étanchéité au niveau de l'ouverture centrale 104 de l'organe de fixation 10, il est prévu un joint de soupape 70 interposé entre la surface inférieure de la rondelle 103 au niveau de l'ouverture 104 et un épaulement formé par une partie interne de la tige d'actionnement 201.

Jusqu'à présent dans l'art antérieur, les joints de col et de soupape sont montés en tant que pièces constitutives séparées. Il est donc nécessaire de prévoir un poste de travail qui oriente et met en place chaque joint à sa place spécifique dans le distributeur. Etant donné que les joints de soupape et de col sont de configuration différente, il est nécessaire de prévoir deux machines différentes permettant leur mise en place.

Il va de soi que la multiplication d'opérations de montage nécessite un investissement technique plus important et rallonge considérablement le temps de montage et de ce fait le prix de revient du distributeur.

En général, on réalise le joint de col avec un diamètre de trou central légèrement inférieur au diamètre externe au corps de pompe ou de valve. Ainsi, on peut transporter la pompe ou la valve avec le joint de col déjà monté dessus. Cependant, dans le cas des pompes en particulier, cela impose que le trou d'évent 202 nécessaire à la mise à l'air de la pompe à chaque actionnement soit placé en-dessous du joint de col, comme on peut le voir sur la figure 1.

La présente invention a pour but de remédier aux inconvénients précités de l'art antérieur en définissant un organe de fixation dont la mise en place s'effectue en une seule opération tout en garantissant une étanchéité parfaite. Cet organe de fixation à étanchéité intégrée doit être fabricable de manière simple et peu coûteuse.

Pour atteindre ce but, la présente invention propose un organe de fixation pour fixer un dispositif de distribution tel qu'une pompe ou une valve, sur un col d'un réservoir destiné à contenir du produit à distribuer, ledit organe comportant une pièce moulée pourvue de moyens de réception pour recevoir ledit dispositif de distribution, d'une surface d'appui destinée à établir, par interposition d'un joint de col, un contact étanche avec le col du réservoir et d'une ouverture centrale destinée au passage d'une tige d'actionnement du dispositif de distribution et étanchéifiée par un joint de soupape, l'un au moins parmi le joint de col et le joint de soupape étant rendu solidaire de la pièce moulée. Avantageusement, le joint de col et le joint de soupape sont rendus solidaires de la pièce moulée. De préférence, ledit au moins un joint est moulé sur la pièce moulée dans un seul et même moule par injection consécutive de matière, de manière à lier mécaniquement ledit joint à la pièce moulée. Grâce à la présente invention, il est donc possible de mouler consécutivement dans un seul et même moule une pièce ayant une bonne tenue mécanique, par exemple constituée de polypropylène ou de polyéthylène et un ou plusieurs joints en matière souple du type thermoplastique élastomère. Une liaison mécanique est ainsi réalisée entre deux matériaux de nature différente qui sont autrement difficiles à assembler. Cette liaison provient du fait que le matériau de joint est injecté dans le moule alors que la pièce précédemment moulée n'est pas encore refroidie. On réalise ainsi une sorte de soudure entre deux matériaux différents. Le ou les joints et la pièce sont par conséquent moulés consécutivement et l'on peut parler de "co-moulage". Cette technique ne nécessite qu'un seul moule ce qui réduit considérablement son temps de fabrication. Ainsi, l'organe de fixation selon l'invention incorpore un ou les deux joints nécessaires à l'étanchéité du dispositif de distribution. Il peut ainsi être manipulé et mis en place en une seule opération. Une économie de temps et de moyens techniques pour sa mise en place est ainsi effectuée.

Un autre avantage inhérent à la fixation du ou des joints sur la pièce moulée réside dans le fait que les joints peuvent être de dimension réduite par rapport à ceux utilisés dans l'art antérieur. En particulier, le joint de col d'un dispositif de l'art antérieur présente un diamètre intérieur correspondant ou plutôt légèrement inférieur au diamètre du corps de pompe afin, d'une part, de garantir un bon centrage du joint de col sur l'extrémité supérieure du col du réservoir, et, d'autre part, d'assujettir le joint de col au corps du dispositif pour ne pas le perdre durant le transport. Avec un organe de fixation incorporé selon l'invention, les joints peuvent présenter des dimensions inférieures étant donné que le centrage du ou des joints sur l'organe de fixation est effectué lors de la fixation du ou des joints sur la pièce moulée. Ainsi, on évite le problème du centrage de joint, on élimine le risque de perte, et de plus, on réalise une économie de matière.

Un autre avantage particulièrement important que procure la présente invention réside dans le fait qu'il est maintenant possible de placer le trou d'évent n'importe où sur sur le corps de pompe, et en particulier le plus haut possible à proximité immédiate de l'extrémité supérieure du corps de pompe. Ceci permet de pouvoir réduire considérablement la hauteur du corps de pompe et de ce fait également la hauteur du dispositif en entier. Ceci n'est pas possible avec un organe de fixation de l'art antérieur, car le joint de col est monté serrant sur le corps de pompe pour des raisons de centrage et de transport susmentionnées.

Selon une caractéristique additionnelle intéressante, ledit au moins un joint est pourvu d'un appendice d'accrochage pour améliorer la fixation dudit joint sur la pièce moulée.

Avantageusement, l'appendice d'accrochage traverse la paroi de la pièce moulée.

L'invention a également un objet un dispositif de distribution comportant un tel organe de fixation.

En outre, il est également prévu un procédé de moulage d'un organe de fixation comprenant de mouler ladite pièce dans un moule, libérer au moins un espace adjacent à ladite pièce précédemment moulée et correspondant audit au moins un joint pour mouler ledit joint dans l'espace ainsi libéré.

L'invention a également pour objet un moule pour mettre en oeuvre le procédé de moulage comprenant des parties de moule définissant un volume d'injection correspondant à ladite pièce moulée, les parties de moule comprenant au moins un tubulaire déplaçable de manière à libérer au moins un espace d'injection adjacent audit volume d'injection et correspondant audit au moins un joint.

Un moule utilisant une technique quelque peu similaire est divulgué dans le document FR-A-2 691 096 pour le moulage de capsule à cordon décoratif.

Avantageusement, les parties de moule incorporent des canules d'injection pour l'injection dudit volume d'injection et dudit au moins un espace d'injection.

Dans une forme de réalisation préférée, le moule comprend deux tubulaires pour libérer deux espaces d'injection correspondant respectivement au joint de col et au joint de soupape.

Selon une autre caractéristique avantageuse, au moins un tubulaire est traversé par une broche traversant également le volume d'injection et'venant en contact avec une canule d'injection pour libérer, après retrait, un espace d'injection supplémentaire correspondant à un appendice d'accrochage.

D'autres caractéristiques, particularités et avantages ressortiront de la description détaillée qui va suivre donnant à titre d'exemple non limitatif un mode de réalisation de l'invention.

Sur les dessins :
- la figure 1 représente un distributeur incorporant un organe de fixation selon l'art antérieur,
- la figure 2 représente un distribution incorporant un organe de fixation selon la présente invention ;
- les 3a à 3c représentent chacune un moule pour réaliser un organe de fixation selon la présente invention, lors de trois étapes de moulage consécutifs afin d'illustrer le procédé de moulage d'un organe de fixation selon l'invention.

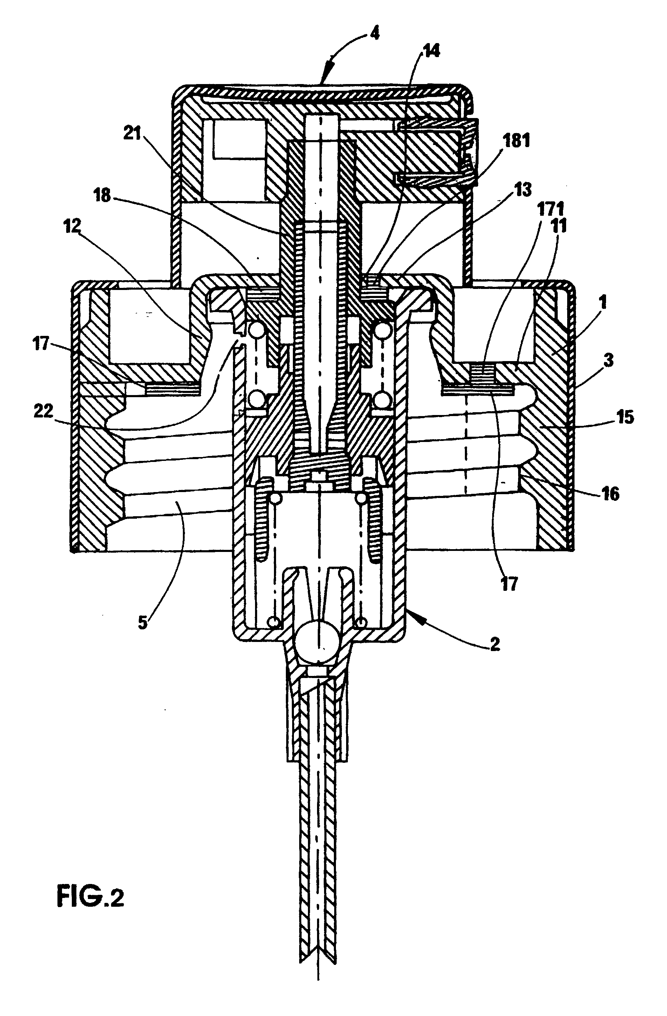

L'organe de fixation représenté sur la figure 2 comprend une pièce moulée en matière plastique 1 semblable à celle représentée sur la figure 1 illustrant l'art antérieur. Ce corps moulé 1 comprend une bague 15 pourvue de filetage intérieurs 16 destiné à venir un prise avec un col fileté 5 d'un réservoir. A partir de la bague externe 15 s'étend vers l'intérieur une collerette radiale 11 qui se prolonge vers le haut par un manchon 12 définissant avec une autre collerette 13 dirigée vers l'intérieur un logement de fixation pour l'extrémité supérieure du corps de pompe ou d'une valve. La collerette intérieure 13 est percée d'une ouverture centrale 14 à travers laquelle la tige d'actionnement ou de soupape 21 de la pompe ou de la valve. La bague extérieure 15 de la pièce moulée peut être recouverte d'une frette de décoration 3. La tige de soupape 21 peut être pourvue à son extrémité supérieure d'un capuchon de distribution 4 semblable à celui représenté sur la figure 1.

Pour l'étanchéité au niveau du col 5 du réservoir, il est prévu un joint de col 17 et pour l'étanchéité de la tige de soupape au niveau de l'ouverture centrale 14, il est prévu un joint de soupape 18. Selon l'invention, le joint de col 17 ou le joint de soupape 18, ou les deux à la fois, sont fixés à la pièce moulée 1. La fixation du ou des joints sur le cops moulé 1 peut être réalisée par n'importe quel moyen de fixation ne nécessitant pas d'organe supplémentaire de fixation. De préférence, les joints sont fixés par une liaison mécanique obtenue en moulant consécutivement la pièce 1 et le ou les joints dans un même moule. Ainsi, le ou les joints sont moulés alors que la pièce 1 n'est pas encore refroidie, ce qui réalise une liaison directe du ou des joints sur la pièce moulée 1 sans utiliser d'agent adhésif. Il est à noter que l'assemblage se fait entre deux matériaux de nature différente, puisque la pièce 1 peut par exemple être réalisée en polypropylène ou polyéthylène et les joints en thermoplastique élastomère.

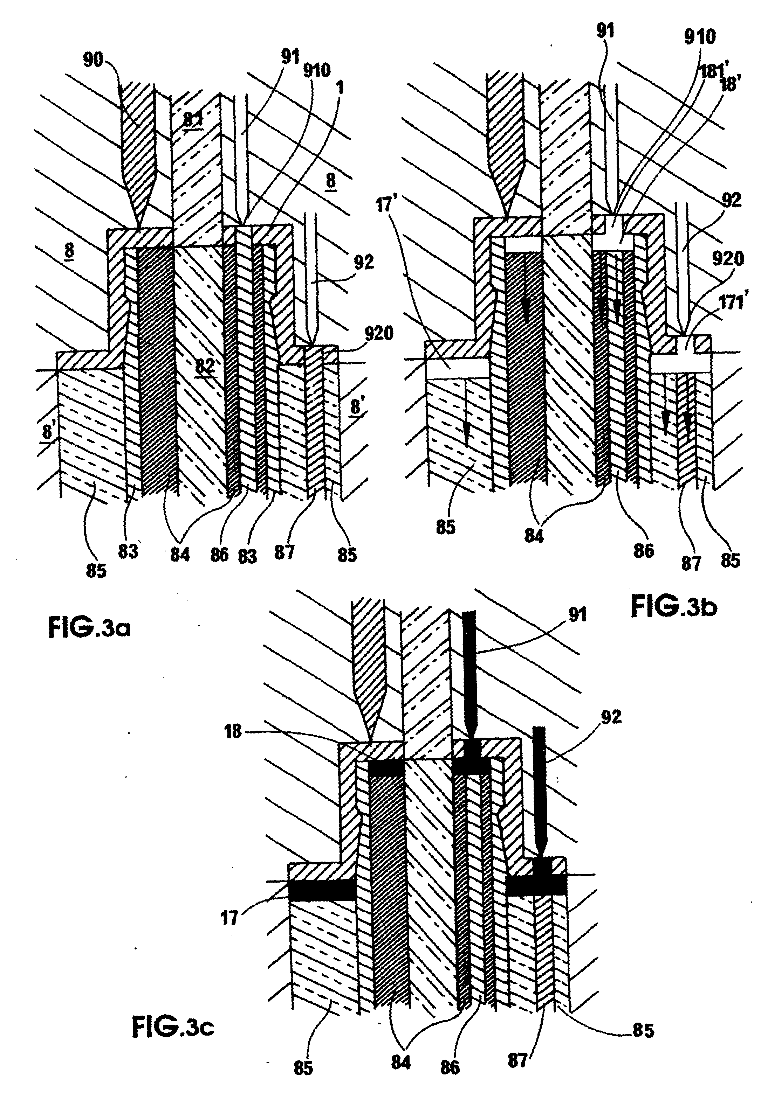

Pour réaliser un tel organe de fixation par "co-moulage" du ou des joints avec le corps 1, on utilise le moule et le procédé de moulage qui va être maintenant décrit en référence aux figures 3a à 3c.

Le moule n'est pas représenté dans son intégralité mais uniquement dans sa partie centrale définissant les cavités de moule nécessaires à la formation de l'organe de fixation. Le moule comprend une coque de moule supérieure 8 et une coque de moule inférieure 8'. La coque de moule 8 définit essentiellement l'empreinte de la partie supérieure de la pièce 1. La coque de moule supérieure 1 est traversée en son centre par une broche 81 définissant l'ouverture centrale 14 de la pièce 1. La coque de moule est également traversée par trois canules d'injection 90, 91 et 92 servant respectivement à l'injection du volume d'injection correspondant à la pièce moulée et aux deux espaces d'injection correspondant aux joints de col et de soupape, respectivement. Le point d'injection de la canule 90 sur le volume d'injection correspondant à la pièce moulée est situé en affleurement de la surface supérieure de la cavité, ainsi que les points d'injection correspondant aux joints, comme représenté sur la figure 3b.

La coque de moule inférieure 8' est traversée par une pluralité de tubulaires déplaçables et fixes définissant les empreintes inférieures et intérieures de l'organe de fixation. La coque de moule inférieure 8' est traversée en son centre par une broche centrale 82 qui vient en butée avec son extrémité avec l'extrémité correspondante de la broche 81 de la coque supérieure 8. La coque de moule inférieure 84 est également traversée par une tubulaire fixe 83, en l'occurrence un manchon cylindrique dont la paroi extérieure définit l'empreinte correspondant à la paroi intérieure du manchon 12 de l'organe de fixation. Ce tubulaire fixe 83 ne sera retiré que lors du démoulage.

La coque de moule inférieure 8' comprend également deux tubulaires 84 et 85. Un premier tubulaire référencé 84 est inséré dans le tubulaire fixe 83 et son intérieur est rempli par la broche centrale 82. Le tubulaire 84 définit avec son extrémité supérieure une partie de la paroi inférieure de la collerette 13 percée en son centre de l'ouverture centrale 14. D'autre part, le tubulaire 85 est disposé dans la coque de moule inférieure 8' et son intérieur est défini par la paroi extérieure du tubulaire fixe 83. En outre, les tubulaires déplaçables 84 et 85 ont chacun pourvus d'une broche d'injection respectives 86 et 87 qui se présente sous la forme d'une tige traversant le tubulaire respectif sur sa hauteur, comme on peut le voir sur les figures 3a à 3c. Pendant, l'étape d'injection de la pièce moulée 1, les broches d'injection 86, 87 s'étendent à travers le volume d'injection correspondant à la pièce 1 pour venir en contact avec l'extrémité des canules d'injection respectives 91 et 92. Les broches d'injection obturent ainsi les canules d'injection pendant l'injection de la pièce moulée 1.

Selon l'invention, les tubulaires 84 et 85 ainsi que les broches d'injection respectives 86 et 87 sont déplaçables de manière à pouvoir être retirés sur une certaine distance, comme représenté sur la figure 3b, afin de pouvoir libérer un espace adjacent à la pièce moulée 1 et correspondant au volume d'injection des joints de soupape et de col. La distance de retrait des tubulaires et broches déplacables définit l'épaisseur des joints respectifs, et l'épaisseur de paroi des tubulaires définit la largeur annulaire des joints respectifs.

Selon une caractéristique avantageuse de l'invention, le retrait des broches d'injection 86 et 87 permet non seulement de libérer une partie des espaces d'injection 17' et 18' correspondant aux joints, mais libère également deux autres espaces 171' et 181' qui remplissent chacun une double fonction. Premièrement, ces espaces 171' et 181' permettent de faire communiquer les canules d'injection 91 et 92 avec les espaces d'injection 17' et 18' correspondant aux joints de col et de soupape. Deuxièmement, ces espaces, après injection, sont remplis de matière, de manière à former des bouchons 171 et 181 qui sont réalisés de manière monobloc avec les joints 17 et 18 proprement dit. Le volume combiné d'un espace injection 17, 18' et d'un espace 171', 181' présente donc la forme d'un disque d'une certaine épaisseur correspondant au joint, surmonté d'un picot correspondant au bouchon 171, 181. Les bouchons servent donc non seulement de passage d'injection, mais également d'appendice d'accrochage permettant d'améliorer la liaison entre les joints et la pièce moulée.

Il sera maintenant décrit en référence successive aux figures 3a à 3c, les différentes étapes du procédé de moulage avec le moule qui vient d'être décrit. La première étape d'injection de l'organe de fixation correspond à l'étape d'injection de la pièce 1. Pour cette étape, les coques de moule 8 et 8' sont en contact l'une de l'autre avec les broches centrales 81 et 82 en contact l'une de l'autre pour définir l'ouverture centrale 14, le tubulaire fixe 83 est en place pour définir la paroi interne sensiblement cylindrique formant le logement de réception du corps de valve ou de pompe, et les tubulaires déplacables 84 et 85 sont dans une position telle que leurs extrémités définissent des parties de paroi inférieure de la pièce 1. Les extrémités des canules 91 et 92 affleurant le volume d'injection correspondant au corps 1 sont obtenues par les broches d'injection 86 et 87 respectivement. Lorsque les parties constitutives du moule sont dans cette position, on peut injecter la matière plastique d'injection dans le volume d'injection correspondant à la pièce 1 ainsi formée. la matière plastique en fusion ainsi injectée occupe alors la totalité du volume correspondant à la pièce 1.

Dès que la température du matériau d'injection est descendue à une température suffisamment basse pour qu'il ne flue plus de par son propre poids et qu'il n'adhère plus aux parties du moule, les tubulaires 84 et 85 ainsi que les broches 86 et 87 sont retirés sur une distance correspondant à l'épaisseur des joints de soupape et de col. Les espaces d'injection ainsi dégagés 17', 18' correspondant aux joints de col et de soupape ainsi que les espaces 171', 181' correspondant aux appendices d'accrochage 171 et 181, comme visible sur la figure 3b, sont alors injectés de matière plastique en fusion à travers les canules 91 et 92. La matière plastique injectée dans les espaces d'injection 17', 18' et 171', 181' est différente de celle injectée dans le volume d'injection correspondant à la pièce 1 ; en effet, la matière plastique injectée dans lesdits espaces 17' et 18' est de préférence un matériau présentant une certaine souplesse, tel que du caoutchouc ou de l'élastomère. Etant donné que les joints 17 et 18 sont injectés alors que la pièce moulée 1 n'est pas encore revenu à la température ambiante fait que les joints adhèrent à la pièce moulée sans adjonction d'agent liant quelconque. Les espaces d'injection 17', 18' et 171', 181' sont alors injectés de matériau plastique pour former les joints 17 et 18, comme représenté sur la figure 3c. Selon une caractéristique intéressante de l'invention, la matière plastique injectée à travers les canules 91 et 92 remplit également l'espace auparavant occupé par les broches 86 et 87 qui communiquent avec les espaces d'injection 17' et 18'. Ainsi, l'appendice formé dans les espaces 171', 181' correspondant aux broches 86 et 87 constitue les appendices d'accrochage 171, 181 améliorant encore davantage la fixation des joints sur la pièce moulée 1.

Bien que la description a été faite en référence à un organe de fixation comportant un joint de col et un joint de soupape "co-moulés" avec la pièce moulée 1, il va de soi que la technique précédemment décrite peut être appliquée à une pièce moulée sur laquelle est fixé un seul joint de la manière décrite, l'autre étant placé dans le dispositif de distribution de manière classique précédemment décrite.

## Revendications

1. Organe de fixation pour fixer un dispositif de distribution (2) tel qu'une pompe ou une valve, sur un col (5) d'un réservoir destiné à contenir du produit à distribuer, ledit organe comportant un corps moulé (1) pourvu de moyens de réception (12, 13) pour recevoir ledit dispositif de distribution, d'une surface d'appui destinée à établir, par interposition d'un joint de col (17), un contact étanche avec le col du réservoir et d'une ouverture centrale (14) destinée au passage d'une tige d'actionnement (21) du dispositif de distribution et étanchéifiée par un joint de soupape (18),
**caractérisé en ce que** l'un au moins parmi le joint de col et le joint de soupape est rendu solidaire de la pièce moulée.

2. Organe selon la revendication 1, dans lequel le joint de col et le joint de soupape sont rendus solidaires de la pièce moulée.

3. Organe selon la revendication 1 ou 2, dans lequel ledit au moins un joint est moulé sur la pièce moulée dans un seul et même moule par injection consécutive de matière, de manière à lier mécaniquement ledit joint à la pièce moulée.

4. Organe selon la revendication 3, dans lequel ledit au moins un joint est pourvu d'un appendice d'accrochage (171, 181) pour améliorer la fixation dudit joint sur la pièce moulée.

5. Organe selon la revendication 4, dans lequel l'appendice d'accrochage traverse la paroi de la pièce moulée.

6. Dispositif de distribution (2) comportant un organe de fixation selon l'une quelconque des revendications précédentes.

7. Procédé de moulage d'un organe de fixation selon l'une quelconque des revendications 3 à 5, comprenant de mouler ladite pièce dans un moule, libérer au moins un espace (17', 18') adjacent à ladite pièce précédemment moulée et correspondant audit au moins un joint pour mouler ledit joint dans l'espace ainsi libéré.

8. Moule pour mettre en oeuvre le procédé de moulage selon la revendication 7, comprenant des parties de moule définissant un volume d'injection correspondant à ladite pièce moulée, **caractérisé en ce que** les parties de moule comprennent au moins un tubulaire (84, 85) déplaçable de manière à libérer au moins un espace d'injection (17', 18') adjacent audit volume d'injection et correspondant audit au moins un joint.

9. Moule selon la revendication 8, dans lequel les parties de moule incorporent des canules d'injection (90, 91, 92) pour l'injection dudit volume d'injection et dudit au moins un espace d'injection, la canule d'injection (91, 92) dudit espace d'injection traversant le volume d'injection.

10. Moule selon la revendication 8 ou 9, comprenant deux tubulaires pour libérer deux espaces d'injection correspondant respectivement au joint de col et au joint de soupape.

11. Moule selon la revendication 8, 9 ou 10, dans lequel au moins un tubulaire est traversé par une broche traversant également le volume d'injection et venant en contact avec une canule d'injection pour libérer, après retrait, un espace d'injection supplémentaire correspondant à un appendice d'accrochage (171, 181).

## Patentansprüche

1. Befestigungsorgan zum Befestigen einer Abgabevorrichtung (2) wie zum Beispiel einer Pumpe oder eines Ventils auf dem Hals (5) eines Behälters, der dazu dient, ein abzugebendes Produkt zu enthalten, wobei das Organ einen geformten Körper (1) umfaßt, der mit folgenden Bestandteilen versehen ist: mit Aufnahmeeinrichtungen (12, 13) zum Aufnehmen der Abgabevorrichtung, mit einer Abstützoberfläche, die dazu dient, unter Zwischenlegung einer Halsdichtung (17) einen dichten Kontakt mit dem Hals des Behälters herzustellen, und mit einer zentralen Öffnung (14), die für das Hindurchtreten einer Betätigungsstange (21) der Abgabevorrichtung bestimmt und durch eine Ventildichtung (18) abgedichtet ist, **dadurch gekennzeichnet, daß** wenigstens eine der beiden Dichtungen, nämlich der Halsdichtung und der Ventildichtung, fest mit dem geformten Element verbunden ist.

2. Organ nach Anspruch 1, bei dem die Halsdichtung und die Ventildichtung fest mit dem geformten Element verbunden sind.

3. Organ nach Anspruch 1 oder 2, bei dem die wenigstens eine Dichtung an dem geformten Element einstückig ausgebildet und selbst durch eine nachfolgende Materialeinspritzung derart geformt ist, daß die Dichtung mit dem geformten Element mechanisch verbunden ist.

4. Organ nach Anspruch 3, bei dem die wenigstens eine Dichtung mit einem Verankerungsfortsatz (171, 181) versehen ist, um die Befestigung der Dichtung an dem geformten Element zu verbessern.

5. Organ nach Anspruch 4, bei dem der Verankerungsfortsatz durch die Wand des geformten Elements hindurch verläuft.

6. Abgabevorrichtung (2), die ein Befestigungsorgan nach einem der vorhergehenden Ansprüche umfaßt.

7. Verfahren zum Formen eines Befestigungsorgans nach einem der Ansprüche 3 bis 5, das folgende Schritte umfaßt: Formen des Elements in einer Form, Freigeben wenigstens eines Freiraums (17', 18') im Anschluß an das zuvor geformte Element und entsprechend der wenigstens einen Dichtung, um diese Dichtung in dem derart freigegebenen Raum zu formen.

8. Form zur Durchführung des Formverfahrens nach Anspruch 7, die Formteile umfaßt, die ein dem geformten Element entsprechendes Einspritzvolumen umgrenzen, **dadurch gekennzeichnet, daß** die Formteile wenigstens ein Rohrelement (84, 85) umfassen, das derart verschiebbar ist, daß es wenigstens einen Einspritzraum (17', 18') im Anschluß an das besagte Einspritzvolumen und entsprechend der wenigstens einen Dichtung freigibt.

9. Form nach Anspruch 8, bei der die Formteile Einspritzkanäle (90, 91, 92) zum Einspritzen in das Einspritzvolumen und den wenigstens einen Einspritzfreiraum umfassen, wobei der Einspritzkanal (91, 92) für den Einspritzfreiraum das Einspritzvolumen durchquert.

10. Form nach Anspruch 8 oder 9, die zwei rohrförmige Elemente zum Freigeben von zwei Einspritzräumen umfaßt, die jeweils der Halsdichtung und der Ventildichtung entsprechen.

11. Form nach Anspruch 8, 9 oder 10, bei der wenigstens ein rohrförmiges Element von einem Zapfen durchquert wird, der auch das Einspritzvolumen durchquert und mit einem Einspritzkanal in Berührung kommt, um nach einer Rückzugsbewegung einen ergänzenden Einspritzfreiraum freizugeben, der einem Verankerungsfortsatz (171, 181) entspricht.

## Claims

1. A fixing member for fixing a dispenser device (2) such as a pump or a valve on a neck (5) of a reservoir for containing a fluid to be dispensed, said member comprising a molded body (1) having reception means (12, 13) for receiving said dispenser device, a bearing surface for acting via an interposed neck gasket (17) to establish leaktight contact with the neck of the reservoir, and a central opening (14) for passing an actuator rod (21) of the dispenser device and sealed by a valve gasket (18), the member being **characterized in that** at least one of the neck gasket and the valve gasket is secured to the molded part.

2. A member according to claim 1, in which the neck gasket and the valve gasket are both secured to the molded part.

3. A member according to claim 1 or claim 2, in which at least gasket is molded onto the molded part in a single mold by consecutive injections of material, so as to bond said gasket mechanically with said molded part.

4. A member according to claim 3, in which said at least one gasket is provided with a fastening appendix (171, 181) for improving retention of said gasket on said molded part.

5. A member according to claim 4, in which the fastening appendix passes through the wall of the molded part.

6. A dispenser device (2) including a fixing member according to any preceding claim.

7. A method of molding a fixing member according to any one of claims 3 to 5, the method comprising molding said part in a mold, and releasing at least one gap (17', 18') adjacent to said previously molded part and corresponding to said at least one gasket in order to mold said gasket in the gap released in this way.

8. A mold for implementing the molding method of claim 7, the mold comprising mold parts defining an injection volume corresponding to said molded part, the mold being **characterized in that** the mold parts include at least one tube (84, 85) displaceable so as to release at least one injection gap (17', 18') adjacent to said injection volume and corresponding to said at least one gasket.

9. A mold according to claim 8, in which the mold parts incorporate injection passages (90, 91, 92) for injecting into said injection volume and said at least one injection gap, the injection passage (91, 92) of said injection gap passing through the injection volume.

10. A mold according to claim 8 or claim 9, comprising two tubes for releasing two injection gaps corresponding respectively to the neck gasket and to the valve gasket.

11. A mold according to claim 8, 9, or 10, in which at least one tube is pierced by a pin that also passes through the injection volume and comes into contact with an injection passage so that once withdrawn it releases an additional injection space corresponding to a fastening appendix (171, 181).
